(19) Europäisches Patentamt / European Patent Office / Office européen des brevets

(11) **EP 4 275 033 B1**

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(21) Anmeldenummer: **21843642.6**

(22) Anmeldetag: **20.12.2021**

(51) Internationale Patentklassifikation (IPC):
**G01N 21/3581** (2014.01)    **G01N 21/89** (2006.01)

(52) Gemeinsame Patentklassifikation (CPC):
**G01N 21/8914; G01N 21/3581; G01N 21/892;**
G01N 21/952; G01N 2021/8918; G01N 2021/8925

(86) Internationale Anmeldenummer:
**PCT/EP2021/086789**

(87) Internationale Veröffentlichungsnummer:
**WO 2022/148642 (14.07.2022 Gazette 2022/28)**

(54) **VERFAHREN UND VORRICHTUNG ZUM DETEKTIEREN VON FEHLSTELLEN EINES STRANGFÖRMIGEN PRODUKTS**

METHOD AND DEVICE FOR DETECTING DEFECTS OF A STRAND-LIKE PRODUCT

PROCÉDÉ ET DISPOSITIF POUR DÉTECTER DES DÉFAUTS D'UN PRODUIT ALLONGÉ CONTINU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.01.2021 DE 102021100051**

(43) Veröffentlichungstag der Anmeldung:
**15.11.2023 Patentblatt 2023/46**

(73) Patentinhaber: **SIKORA AG**
**28307 Bremen (DE)**

(72) Erfinder:
• **SIKORA, Harald**
**28357 Bremen (DE)**

• **HOLLE, Armin**
**28832 Achim (DE)**
• **SCHUH, Kolja Tobias**
**28307 Bremen (DE)**

(74) Vertreter: **Hauck Patentanwaltspartnerschaft mbB**
**Postfach 11 31 53**
**20431 Hamburg (DE)**

(56) Entgegenhaltungen:
**WO-A1-2019/086081      US-B2- 10 514 336**

## Beschreibung

Die Erfindung betrifft ein Verfahren zum Detektieren von Fehlstellen eines entlang einer Förderrichtung geförderten strangförmigen Produkts. Die Erfindung betrifft außerdem eine Vorrichtung zum Detektieren von Fehlstellen eines entlang einer Förderrichtung geförderten strangförmigen Produkts.

Aus US 10514336 B2 sind eine Terahertzmessvorrichtung und ein Terahertzmessverfahren zur Messung von Prüfobjekte bekannt, mit denen es möglich sein soll, gezielt Fehlstellen des Prüfobjekts zu detektieren. Dazu wird Terahertzstrahlung nicht senkrecht zu ordnungsgemäßen Grenzflächen bzw. Schichtgrenzen auf das Prüfobjekt ausgesandt. Sofern zu dieser TerahertzstrahlungReflexionen detektiert werden, wird davon ausgegangen, dass eine Fehlstelle vorliegt.

Aus WO 2019/086081 A1 ist ein ähnliches Verfahren bekannt, bei dem mit einem Terahertzzusatzsensor einen Terahertzzusatzstrahl nicht senkreicht zu einer Förderrichtung eines Messobjekts ausgesandt wird. Sofern zu dem Terahertzzusatzstrahl ein Zusatzreflexionspeak ermittelt wird, wird dieser einer Fehlstelle in oder auf dem Messobjekt zugeordnet.

Beispielsweise dünne Kunststoffrohre, sogenannte Microducts, in die zu einem späteren Zeitpunkt Datenkabel zum Beispiel aus Glasfaser eingeschoben werden, können in Extrusionsvorrichtungen hergestellt werden. Solche Kunststoffrohre besitzen einen kleinen Außen- und Innendurchmesser. Auch dünne Schläuche, zum Beispiel Medizinschläuche, wie Infusionsschläuche für medizinische Anwendungen, können in solchen Anlagen hergestellt werden. Bei solchen Medizinschläuchen kann es sich um Single- oder Multilumenschläuche handeln. Im Extrusionsprozess kann es zu einem unkontrollierten und unregelmäßigen Austreten von Resten von extrudiertem Material aus dem Extruder kommen. Solche zum Beispiel im Tages-oder Mehrtagesrhythmus abfallenden Extrusionsrückstände können im Inneren des extrudierten Rohrs an der Rohrinnenwand kleben und den freien Querschnitt des Rohrs zumindest teilweise verkleinern. Auch können solche Rückstände beweglich im Inneren des Rohrs verbleiben und bei Durchleiten zum Beispiel einer Flüssigkeit bei späterer Benutzung mitgerissen werden und zu einem Verschluss des Rohrs führen oder unkontrolliert austreten. Beides ist besonders in medizinischen Anwendungen unbedingt zu vermeiden. Derartige Rückstände führen zu entsprechendem Ausschuss.

Aufgrund der in der Regel hohen Fördergeschwindigkeit von insbesondere dünnen extrudierten Strängen ist eine Online-Detektion von Fehlstellen, wie im Inneren des Rohrs verbliebene Extrusionsrückstände, bislang nicht zufriedenstellend gelungen.

Im Stand der Technik haben sich derzeit zwei Methoden zum Detektieren derartiger Fehlstellen etabliert. Nach einer ersten Methode wird ein Dorn von etwa 80% des Innendurchmessers des Rohrs magnetisch im Rohrinneren gehalten. Wird dieser aus seiner gehaltenen Position mitgerissen, insbesondere durch einen im Inneren des geförderten Rohrs befindlichen Extrusionsrückstand, wird ein entsprechendes Fehlersignal ausgegeben. Nach einer zweiten Methode wird nach abgeschlossener Extrusion eine Kugel von ca. 80% des Innendurchmessers des Rohrs mittels Druckluft durch eine ganze Rolle eines extrudierten Rohrs geblasen. Befindet sich im Inneren kein Extrusionsrückstand, tritt diese Kugel nach Durchlaufen des gesamten Rohrs aus. Tritt die Kugel hingegen nicht aus, kann auf das Vorhandensein eines Extrusionsrests geschlossen werden. Beispielsweise Medizinschläuche werden im Rahmen einer Endfertigung oft mit einem Metalldraht durchstoßen, um den ordnungsgemäßen Durchgang sicherzustellen.

Die bekannten Detektionsmethoden sind einerseits aufwendig und erlauben keine berührungslose Detektion. Zumindest letztere Methoden erlauben eine Detektion darüber hinaus nur nach Abschluss des Herstellvorgangs, was zu entsprechend hohem Ausschuss führt. Die genaue Lokalisierung einer Fehlstelle ist schwierig oder unmöglich. Die bekannten Detektionsmethoden sind im Übrigen nur für rohrförmige Produkte geeignet.

Ausgehend von dem erläuterten Stand der Technik liegt der Erfindung daher die Aufgabe zugrunde, ein Verfahren und eine Vorrichtung der eingangs genannten Art bereitzustellen, mit denen Fehlstellen eines geförderten strangförmigen Produkts, insbesondere den Querschnitt verengende Extrusionsrückstände im Inneren eines extrudierten strangförmigen Produkts, mit geringem Aufwand zuverlässig und präzise online und berührungslos detektiert werden können.

Die Erfindung löst die Aufgabe durch ein Verfahren gemäß Anspruch 1 und eine Vorrichtung gemäß Anspruch 12. Vorteilhafte Ausgestaltungen finden sich in den abhängigen Ansprüchen, der Beschreibung und den Figuren.

Bei dem strangförmigen Produkt handelt es sich insbesondere um ein gleichförmiges Produkt. Das strangförmige Produkt weist ohne Fehlstelle insbesondere ein weitgehend konstantes Profil hinsichtlich Geometrie und Material auf. Es kann sich insbesondere um ein langes Produkt handeln. Das strangförmige Produkt kann ein Rohr sein. Das strangförmige Produkt kann einen kleinen Außen- und damit auch kleinen Innendurchmesser besitzen. Das strangförmige Produkt kann ein in einer Extrusionsvorrichtung extrudiertes Produkt sein. Die Förderrichtung, entlang der das strangförmige Produkt gefördert wird, kann insbesondere entlang der Längsachse des strangförmigen Produkts verlaufen. Das strangförmige Produkt kann dabei während der erfindungsgemäßen Detektionsmessung mit einer hohen Fördergeschwindigkeit gefördert werden. Das strangförmige Produkt kann zum Beispiel aus Kunststoff, Glas oder Papier bestehen. Es kann sich bei dem strangförmigen Produkt um ein dünnes Rohr, einen sogenannten Microduct, handeln, in das nachfolgend ein Datenkabel zum Beispiel aus einem Glasfasermaterial eingeschoben wird. Das strangförmige Produkt kann auch leitende strangförmige Komponenten enthalten, wie es z.B. in einem elektrischen Kabel der Fall ist. Auch kann es sich zum Beispiel um einen dünnen Schlauch handeln, zum Beispiel für eine spätere medizinische Verwendung, zum Beispiel als Infusionsschlauch. Bei derartigen Medizinschläuchen kann es sich um Single- oder Multilumenschläuche handeln. Darüber hinaus kann es sich bei dem strangförmigen Produkt auch um ein Profil handeln, beispielsweise ein Kunststoffprofil. Kunststoffprofile sind oft sehr komplex und es gibt praktisch keine geeignete Möglichkeit, online während der Produktion die Dimensionen zu vermessen. Auch für solche Produkte eignet sich die Erfindung, indem im Profil auftretende Fehler, wie beispielsweise Extrusionsrückstände, erkannt werden können.

Die Vermessung von Geometrieparametern, wie Durchmesser und/oder Wanddicke eines entlang seiner Längsrichtung geförderten Strangs, wie eines vergleichsweise langsam geförderten Kunststoffrohrs großen Durchmessers, mittels Terahertzstrahlung ist zum Beispiel bekannt aus WO 2016/139155 A1. Dieser Erfindung liegt nun die Erkenntnis zugrunde, dass sich auch bei sehr schnell geförderten strangförmigen Produkten sehr kleinen Durchmessers mittels Terahertzstrahlung Fehlstellen, zum Beispiel im Inneren eines Rohrs befindliche Extrusionsrückstände, zuverlässig anhand einer geeigneten Auswertung der empfangenen Terahertzstrahlungssignale detektieren lassen. Zu diesem Zweck wird erfindungsgemäß von mindestens einem Sender Terahertzstrahlung auf das entlang der Förderrichtung geförderte strangförmige Produkt ausgesendet und von dem strangförmigen Produkt reflektierte Terahertzstrahlung von mindestens einem Empfänger empfangen. Das strangförmige Produkt kann zumindest teiltransparent, insbesondere auch vollständig transparent, für die ausgesandte Terahertzstrahlung sein. Wenigstens ein Teil der Terahertzstrahlung kann also das Produkt durchstrahlen und wird dabei entsprechend an äußeren und inneren Grenzflächen des strangförmigen Produkts reflektiert. Es ist auf diese Weise möglich, insbesondere im Inneren des strangförmigen Produkts befindliche Fehlstellen, zum Beispiel Extrusionsrückstände, zu detektieren. Das strangförmige Produkt kann aber auch aus einem Material bestehen, das nicht transparent für die ausgesandte Terahertzstrahlung ist, zum Beispiel aus Metall. Dann können naturgemäß nur Fehlstellen auf der Außenseite des Produkts detektiert werden.

Die von dem mindestens einen Sender ausgesendete Terahertzstrahlung trifft auf das strangförmige Produkt und wird an äußeren und, bei ausreichender Transparenz, an inneren Grenzflächen des strangförmigen Produkts reflektiert. Die reflektierte Terahertzstrahlung gelangt zu dem mindestens einen Empfänger, der die reflektierte Terahertzstrahlung als Terahertzstrahlungssignal empfängt. Der mindestens eine Empfänger nimmt einen zeitlichen Verlauf der empfangenen Terahertzstrahlung auf. Das strangförmige Produkt wird während der erfindungsgemäßen Messung in Förderrichtung durch den Messaufbau bewegt. Bestenfalls bewegt sich das strangförmige Produkt dabei ausschließlich entlang der Förderrichtung, zum Beispiel seiner Längsachse. Dann ist das durch den mindestens einen Empfänger empfangene Terahertzstrahlungssignal im Wesentlichen konstant solange keine Fehlstellen vorliegen. Das Auftreten einer Fehlstelle, zum Beispiel eines im Inneren des strangförmigen Produkts befindlichen Extrusionsrückstands, zeigt sich dann besonders deutlich in dem durch den mindestens einen Empfänger aufgenommenen zeitlichen Verlauf der Terahertzstrahlungssignale bzw. deren zeitlicher Veränderung.

Aus der durch den mindestens einen Empfänger aufgenommenen Terahertzstrahlung lässt sich erfindungsgemäß eine Fehlstelle auch dann detektieren, wenn das empfangene Terahertzstrahlungssignal ohne Fehlstelle nicht konstant ist. In der Praxis bewegen sich insbesondere schnell geförderte strangförmige Produkte geringen Durchmessers während des Förderns entlang der Förderrichtung gleichzeitig auch lateral, insbesondere quer zur Förderrichtung. Diese laterale Bewegung kann insbesondere eine laterale Schwingung sein. Die laterale Bewegung kann zum Beispiel eine periodische Bewegung sein. Der mindestens eine Empfänger empfängt dann auch ohne Vorliegen einer Fehlstelle ein amplitudenmoduliertes und phasenmoduliertes Terahertzstrahlungssignal, das eine Online-Detektion von Fehlstellen im Stand der Technik bislang ausgeschlossen hat. Beispielsweise empfängt der mindestens eine Empfänger ohne Vorliegen einer Fehlstelle ein periodisches Strahlungssignal. Der Erfindung liegt die Erkenntnis zugrunde, dass auch in einem solchen Fall eine Fehlstelle eine charakteristische Änderung der empfangenen Terahertzstrahlungssignale verursacht. So besitzt eine beispielsweise laterale Schwingung eines entlang der Förderrichtung geförderten strangförmigen Produkts in der Regel eine niedrige Schwingungsfrequenz von weniger als 50 Hertz, insbesondere weniger als 10 Hertz, zum Beispiel etwa 1 Hertz. Weiterhin bewegt sich das strangförmige Produkt in der Regel erheblich schneller in Förderrichtung als in lateraler Richtung senkrecht zur Förderrichtung. Die (maximale) Bewegungsgeschwindigkeit des strangförmigen Produkts bzw. die Bewegungsfrequenz des strangförmigen Produkts in Förderrichtung kann zum Beispiel mindestens zehnmal größer sein als die (maximale) Bewegungsgeschwindigkeit bzw. die Bewegungsfrequenz des strangförmigen Produkts quer zur Förderrichtung. Die Erfinder der vorliegenden Anmeldung haben erkannt, dass sich bei schnell entlang der Förderrichtung geförderten strangförmigen Produkten geringen Durchmessers Fehlstellen, wie im Inneren verbliebene Extrusionsrückstände, als temporäre, insbesondere kurzzeitige bzw. vorübergehende bzw. schnelle bzw. hochfrequente Änderung des empfangenen Terahertzstrahlungssignals zeigen. Dies gilt trotz einer gegebenenfalls vorhandenen lateralen Bewegung des strangförmigen Produkts, insbesondere da das strangförmige Produkt im fehlerfreien Zustand ein weitgehend konstantes Profil hinsichtlich Geometrie und Material aufweist.

Fehlstellen erzeugen aufgrund ihrer Geometrie und gegebenenfalls auch aufgrund ihrer Materialabweichung von dem Material des strangförmigen Produkts eine Anomalie, die zu einer entsprechenden Veränderung des Reflektionsverhaltens des strangförmigen Produkts führt. Beispielsweise kann eine in der Regel unregelmäßig geformte Fehlstelle, wie ein im Inneren des Produkts verbliebener Extrusionsrückstand, eine im Vergleich zu den inneren und äußeren Grenzflächen des Produkts ohne Fehlstelle unregelmäßige bzw. diffuse Reflektion der Terahertzstrahlung verursachen. Dies führt zu einer entsprechenden Änderung des von dem mindestens einen Empfänger empfangenen Strahlungssignals. Da das strangförmige Produkt in der Regel insbesondere im Vergleich zu einer lateralen Bewegung schnell entlang der Förderrichtung gefördert wird, ist das durch die Fehlstelle verursachte geänderte Reflektionsverhalten in dem erfindungsgemäß aufgenommenen zeitlichen Verlauf der reflektierten Terahertzstrahlungssignale als schnelle, temporäre Änderung, insbesondere schnellere bzw. hochfrequentere Änderung als eine etwaige laterale Änderung, erkennbar und damit auswertbar.

Die Erfindung erlaubt es somit in einfacher und zuverlässiger Weise, entlang einer Förderrichtung geförderte strangförmige Produkte berührungslos, online und von außen auf Fehlstellen zu untersuchen. Ausschuss kann minimiert werden. Die erfindungsgemäße Detektion kann in Echtzeit erfolgen. Auf Grundlage einer detektierten Fehlstelle können weitere Maßnahmen ergriffen werden. Zum Beispiel kann ein Warnsignal ausgegeben werden und/oder eine detektierte Fehlstelle kann angezeigt werden, insbesondere in Echtzeit, und/oder es kann Einfluss auf Produktionsparameter der Extrusionsvorrichtung genommen werden bis hin zu einem Stopp der Extrusionsvorrichtung.

Im Gegensatz zu potentiellen anderen eventuell denkbaren Messverfahren zur berührungslosen Detektion von Fehlstellen, wie zum Beispiel der Verwendung sichtbaren Lichts bzw. Laserlichts, hat die erfindungsgemäße Messung mit Terahertzstrahlung den Vorteil, dass Terahertzstrahlung weitgehend unempfindlich gegen Störungen ist, wie sie zum Beispiel in einer schwierigen Messumgebung, wie einer Extrusionsanlage, auftreten können. So erfolgt in derartigen Extrusionsanlagen bekanntlich eine Abkühlung des extrudierten Produkts zum Beispiel durch Aufsprühen einer Kühlflüssigkeit, wie Wasser, auf die Oberfläche des Produkts. Dabei entstehen erhebliche Mengen Dampf, die optische Messverfahren stören. Die Verwendung zum Beispiel von Röntgenstrahlung zum Detektieren von Fehlstellen, die potentiell eventuell ebenfalls denkbar wäre, führt einerseits zu erheblich höheren Kosten und andererseits zu erheblichen Sicherheitsauflagen und einem entsprechenden Aufwand.

Bei der erfindungsgemäßen Auswertung können die von dem mindestens einen Sender ausgesandten Terahertzsendesignale mit den von dem mindestens einen Empfänger empfangenen Terahertzempfangssignalen gemischt werden. Anschließend kann eine Bandpassfilterung erfolgen, zum Beispiel eine Tiefpassfilterung. Das durch eine Reflektion der Terahertzstrahlung hervorgerufene Signal

$$S_j = I_j + iQ_j = s_j * \exp\left(i\frac{2d_j}{L}\right)$$ ergibt sich grundsätzlich aus der Wellenlänge L der Terahertzstrahlung, dem Abstand d des mindestens einen Senders bzw. des mindestens einen Empfängers zu der die Reflektion verursachenden Grenzfläche und der Stärke der Reflektion s, wobei in der obigen Formel davon ausgegangen wurde, dass sich Sender und Empfänger am selben Ort befinden, insbesondere in Form eines Transceivers. Das empfangene Gesamtsignal lässt sich als Summe aller Reflektionen verstehen zu $S = \sum_j S_j$. Entsprechend führt eine Veränderung von Parametern, wie zum Beispiel des Abstands d zu einer entsprechenden Veränderung in dem empfangenen Reflektionssignal.

Der mindestens eine Sender und der mindestens eine Empfänger können im Wesentlichen an demselben Ort angeordnet sein. Sie können zum Beispiel in einem Transceiver integriert sein. Der mindestens eine Sender kann monofrequente Terahertzstrahlung ausstrahlen. Die Frequenz der Terahertzstrahlung kann zum Beispiel in einem Frequenzbereich von 10 GHz bis 3 THz liegen. Es kann sich um sogenannte Millimeterwellen handeln. Wie bereits erläutert, lassen sich mit Terahertzstrahlung insbesondere in schwierigen Prozessumgebungen, in denen optische Systeme, wie Lasersysteme, Schwierigkeiten haben, zuverlässige Messergebnisse erzielen. Der mindestens eine Empfänger bzw. ein entsprechender Transceiver verfügen vorzugsweise über einen I- und einen Q-Kanal. Damit ist grundsätzlich eine dem Fachmann an sich bekannte Quadraturamplitudenmodulation möglich. Das Amplitudenmodulieren zweier Träger in Quadratur kann dabei als Amplituden- und Phasenmodulieren eines einzelnen Trägers verstanden werden. Die beiden Basisbandsignale werden auch als I-Kanal für In-phase-Component und Q-Kanal für Quadrature-Component bezeichnet.

Erfindungsgemäß kann beispielsweise durch eine Auswerteeinrichtung der erfindungsgemäßen Vorrichtung eine Schwelle für eine erkannte temporäre Veränderung des von dem mindestens einen Empfänger empfangenen Terahertzstrahlungssignals vorgegeben werden, bei deren Überschreiten auf eine Fehlstelle geschlossen wird. Beispielsweise kann bei Detektieren einer Fehlstelle ein entsprechendes Signal ausgegeben werden, wie zum Beispiel ein Alarm, oder ein Fehlerzähler, oder es können andere Maßnahmen ergriffen werden, wie bereits erläutert.

Wie ebenfalls bereits erläutert, kann es sich bei dem strangförmigen Produkt um ein in einer Extrusionsvorrichtung extrudiertes Rohr handeln. Bei den erfindungsgemäß detektierten Fehlstellen kann es sich wie erwähnt um Extrusionsrückstände im Inneren des Rohrs handeln. Die erfindungsgemäße Vorrichtung kann auch die Extrusionsvorrichtung umfassen.

Das strangförmige Produkt wird mit einer Fördergeschwindigkeit von mehr als 50 m/min, vorzugsweise mehr als 75 m/min, entlang der Förderrichtung gefördert. Weiterhin kann das strangförmige Produkt einen Außendurchmesser von weniger als 10 mm, vorzugsweise weniger als 5 mm, besitzen. Sofern es sich bei dem strangförmigen Produkt um ein Rohr handelt, kann das Rohr entsprechend einen Innendurchmesser von weniger als 10 mm, vorzugsweise weniger als 5 mm, besitzen.

Nach einer weiteren Ausgestaltung können (zu detektierende) Strukturen oder Wandstärken des strangförmigen Produkts kleiner als die Wellenlänge der verwendeten Terahertzstrahlung sein. Durch das Auswerten einer Änderung der empfangenen Strahlungssignale ist die Erfindung nicht darauf angewiesen, Strukturen oder z.B. Wandstärken aufzulösen. In üblichen Messvorrichtungen wird FMCW-Strahlung eingesetzt. Dies erfordert zum Beispiel zum Vermessen von Wandstärken eines Rohrs eine entsprechend große Bandbreite. Dadurch können in der Regel nur kleinste Wandstärken in der Größenordnung der Wellenlänge gemessen werden. Mit dem erfindungsgemäßen Verfahren entfällt das Erfordernis einer großen Bandbreite und es können kleinere Strukturen bzw. Wandstärken vermessen werden, insbesondere kleiner als die Wellenlänger der Terahertzstrahlung.

Beim erfindungsgemäßen Verfahren führt das strangförmige Produkt während des Förderns entlang der Förderrichtung auch eine laterale Bewegung quer zur Förderrichtung aus, und wird aus der temporären Veränderung des von dem Empfänger empfangenen Terahertzstrahlungssignals nur auf eine Fehlstelle des strangförmigen Produkts geschlossen, wenn eine Frequenz der temporären Veränderung größer ist als eine Frequenz der lateralen Bewegung des strangförmigen Produkts. Eine durch eine laterale Bewegung verursachte laterale Positionsänderung des Produkts führt zu Abstandsänderungen zwischen dem mindestens einen Sender bzw. Empfänger und dem strangförmigen Produkt bzw. den die Terahertzstrahlung reflektierenden Grenzflächen. Diese Abstandsänderungen verursachen eine Phasenänderung des empfangenen Terahertzstrahlungssignals und zusätzlich eine schwächere Änderung der Signalstärke. Wie bereits erläutert, erfolgt eine solche Positionsänderung des Produkts typischerweise überwiegend im Bereich niedriger Frequenzen von weniger als 50 Hz, insbesondere weniger als 10 Hz, zum Beispiel weniger als 2 Hz. Eine Fehlstelle im strangförmigen Produkt führt ebenfalls zu einer Signaländerung. So führt ein Fremdkörper, wie ein Extrusionsrückstand, im Inneren des Produkts zu einem veränderten Reflektionsverhalten, zum Beispiel zusätzlichen Reflektionen, und/oder einer lokalen Änderung der Grenzflächengeometrie, zu einer Änderung der Phase und/oder der Reflektionsstärke des Terahertzstrahlungssignals. Solche Änderungen besitzen signifikante höherfrequente Komponenten von typischerweise mehr als 10 Hz, insbesondere mehr als 50 Hz, und weniger als 1 kHz. Die Frequenzwerte können abhängig von der Fördergeschwindigkeit variieren. Dies erlaubt es, Fehlstellen zuverlässig von lateralen Positionsänderungen des Produkts aufgrund einer lateralen Bewegung zu diskriminieren. Selbst laterale Schwingungen des Produkts in Frequenzbereich von Fehlstellen sind grundsätzlich unproblematisch, sofern sie hinreichend klein sind (Amplitude x Frequenz), um sie von Fehlstellen unterscheiden zu können. Bei stärkeren Schwingungen müssten diese als solche erkannt werden, um sie herausfiltern zu können. Dies kann allerdings die Messempfindlichkeit beeinträchtigen und die Auswertung komplexer gestalten. Ziel sollte daher sein, starke Schwingungen des strangförmigen Produkts in dem erläuterten höheren Frequenzbereich zu vermeiden. Es ist beispielsweise möglich, dass auf eine Fehlstelle des strangförmigen Produkts nur geschlossen wird, wenn eine Frequenz der temporären Veränderung mindestens 5 mal so hoch, vorzugsweise mindestens 10 mal so hoch ist wie eine Frequenz der lateralen Bewegung des strangförmigen Produkts. Um Probleme bei der Detektion von Fehlstellen aufgrund einer lateralen Bewegung zu vermeiden, können erfindungsgemäß Mittel vorgesehen sein, die eine Schwingungsfrequenz des strangförmigen Produkts quer zu der Förderrichtung verringern, insbesondere in ausreichender Weise verringern, so dass etwaige Fehlstellen sicher zu detektieren sind. Solche Mittel können zum Beispiel entsprechende Führungsmittel für das strangförmige Produkt während seiner Förderung entlang der Förderrichtung umfassen.

Nach einer weiteren besonders praxisgemäßen Ausgestaltung kann die erste Ableitung des von dem mindestens einen Empfänger empfangenen Terahertzstrahlungssignals gebildet werden. Es kann dann auf eine Fehlstelle geschlossen werden, wenn das einfach abgeleitete Terahertzstrahlungssignal einen definierten Schwellwert überschreitet. Mittels der Ableitung lassen sich insbesondere temporäre Änderungen des empfangenen Terahertzstrahlungssignals auswertungstechnisch besonders zuverlässig und einfach ermitteln. Eingangs wurde bereits erläutert, dass sich das von dem mindestens einen Empfänger empfangene Gesamtsignal als Summe aller Einzelreflektionen verstehen lässt zu $S = \sum_j S_j$. Dabei lässt sich grundsätzlich unterscheiden zwischen Reflektionen vom Produkt $S^P$ und Reflektionen von Grenzflächen in der Umgebung des Produkts $S^U$. Da sich die Umgebung während der Messung nicht ver-

$$\frac{d}{dt}S = \frac{d}{dt}S^P$$

ändert, gilt . Die Ableitung des empfangenen Terahertzstrahlungssignals wird somit nur durch Änderungen von Grenzflächen des strangförmigen Produkts verursacht. Bewegt sich ein fehlerfreies Produkt ohne laterale Bewegung durch den erfindungsgemäßen Messaufbau, ändern sich die Reflektionen nicht und die Ableitung beträgt 0. Liegt hingegen eine zum Beispiel periodische laterale Schwingung des strangförmigen Produkts mit niedriger Frequenz vor, führt dies zu einem entsprechend regelmäßigen Ableitungssignal. Eine Fehlstelle führt hingegen zu einer temporären und im Vergleich schnellen Änderung des Ableitungssignals und kann daher messtechnisch zuverlässig identifiziert werden. Das Ausmaß einer Fehlstelle ist grundsätzlich korreliert zur Stärke der Ableitung des Signals S. Dies kann entsprechend genutzt werden, um einen Schwellwert zu definieren, ab dem eine Änderung des abgeleiteten Terahertzstrahlungssignals als signifikante Fehlstelle definiert und detektiert bzw. angezeigt wird. Die abgeleiteten Terahertzstrahlungssignale lassen sich auch weiterverarbeiten, um den Einfluss von Störungen zu verringern und die Detektionsschwelle herabzusetzen. Beispielsweise ist ein Empfangsfilter zum Minimieren eines Rauschens im abgeleiteten Signal denkbar und sinnvoll.

Nach einer weiteren Ausgestaltung kann die n-te Ableitung des von dem mindestens einen Empfänger empfangenen Terahertzstrahlungssignals gebildet werden, mit n >= 2. und es kann auf eine Fehlstelle geschlossen werden, wenn das n-fach abgeleitete Terahertzstrahlungssignal einen definierten Schwellwert überschreitet. Die Schwellwerte für die erste und die n-te Ableitung können unterschiedliche Schwellwerte sein. Auch durch das Bilden zum Beispiel der zweiten Ableitung können schnelle Änderungen im empfangenen Terahertzstrahlungssignal untersucht werden. Insbesondere können solche Änderungen genauer definiert werden. Zum Beispiel kann die Richtung einer Änderung untersucht werden, woraus weitere Informationen über die Fehlstelle ermittelt werden können. Auch andere Funktionen können geeignet sein zur Auswertung schneller Veränderungen des empfangenen Terahertzstrahlungssignals.

Der Schwellwert kann nach einer weiteren Ausgestaltung abhängig von der Fördergeschwindigkeit des strangförmigen Produkts entlang der Förderrichtung definiert werden. Die Ableitung des empfangenen Terahertzstrahlungssignals ist grundsätzlich proportional zur Geschwindigkeit des Produkts. Bei bekannter Fördergeschwindigkeit des Produkts lässt sich dies entsprechend bei der Definition des Schwellwerts kompensieren.

Das von dem mindestens einen Empfänger empfangene Terahertzstrahlungssignal kann mittels eines Bandpassfilters gefiltert werden. Der Bandpassfilter kann zum Beispiel ein Bandpassfilter zum Herausfiltern niederfrequenter Signalanteile sein, die durch eine laterale Bewegung des strangförmigen Produkts und nicht durch eine Fehlstelle verursacht sind. Dies erleichtert die Auswertung weiter.

Nach einer weiteren Ausgestaltung kann der mindestens eine Sender ein Terahertz-Signal aussenden mit einer Bandbreite, die kleiner ist als eine Frequenz, die der räumlichen Auflösbarkeit des Durchmessers des strangförmigen Produkts entspricht. Der mindestens eine Empfänger kann entsprechend eine Empfangsbandbreite besitzen, die kleiner ist als eine Frequenz, die der räumlichen Auflösbarkeit des Durchmessers des strangförmigen Produkts entspricht Für die räumliche Auflösbarkeit zu detektierender Strukturen wird im Stand der Technik eine Bandbreite angesetzt, von Lichtgeschwindigkeit/(2*Brechungsindex * Strukturgröße). Beispielsweise bei einer aufzulösenden Strukturgröße von 1 mm und einem üblichen Brechungsindex von 1,5 erfordert dies eine Bandbreite von 100 GHz. Terahertzsender und -empfänger mit solchen Bandbreiten sind aber teuer und aufwendig und insbesondere derartige Terahertzsender unterliegen besonderen Zulassungsverfahren. Erfindungsgemäß wurde dagegen erkannt, dass durch das erfindungsgemäße Verfahren eine räumliche Auflösbarkeit und damit eine große Bandbreite wie im Stand der Technik gerade nicht erforderlich ist, sondern mit einer kleineren Bandbreite gearbeitet werden kann als der Frequenz, die für die räumliche Auflösbarkeit insbesondere des Durchmessers des strangförmigen Produkts erforderlich wäre. Dadurch können erfindungsgemäß einfachere und kostengünstigere Sender und Empfänger verwendet werden.

Nach einer weiteren diesbezüglichen Ausgestaltung kann der mindestens eine Sender ein Terahertz-Signal aussenden mit einer Bandbreite, die weniger als 5% der mittleren Frequenz des Terahertz-Signals, vorzugsweise weniger als 3% der mittleren Frequenz des Terahertz-Signals, weiter vorzugsweise weniger als 2% der mittleren Frequenz des Terahertz-Signals, beträgt. Damit können auch gängige ISM-Bänder (Industrial, Scientific and Medical Bands) verwendet werden, wodurch besondere Zulassungsverfahren vermieden werden können. Beispielsweise kann die Bandbreite nicht mehr als 1 % der mittleren Frequenz betragen. So kann zum Beispiel das ISM-Band von 122 bis 123 GHz genutzt werden.

Der mindestens eine Sender kann nach einer weiteren Ausgestaltung ein Terahertz-Dauerstrichsignal auf einer Frequenz mit im Wesentlichen gleichbleibender Amplitude aussenden. Hieraus ergibt sich eine besonders gute Auswertbarkeit. Der mindestens eine Sender der erfindungsgemäßen Vorrichtung kann entsprechend ein Sender zum Aussenden eines Terahertz-Dauerstrichsignals auf einer Frequenz mit im Wesentlichen gleichbleibender Amplitude sein.

Nach einer weiteren Ausgestaltung kann vorgesehen sein, dass Terahertzstrahlung von mehreren Sendern aus verschiedenen Richtungen auf das entlang der Förderrichtung geförderte strangförmige Produkt ausgesendet wird, und dass die von den mehreren Sendern ausgesendete und von dem strangförmigen Produkt reflektierte Terahertzstrahlung von mehreren Empfängern empfangen wird. Die Ausrichtung von die Terahertzstrahlung reflektierenden Grenzflächen ist maßgeblich für die Stärke der Reflektion. Ungünstig ausgerichtete Grenzflächen von Fehlstellen können daher zu einer sehr viel geringeren Änderung des zeitlichen Verlaufs des empfangenen Terahertzstrahlungssignals führen als identische Fehlstellen, die aber anders ausgerichtet sind. Um einer solchen unerwünschten Ausrichtungsabhängigkeit entgegenzuwirken, sind bei der vorgenannten Ausgestaltung mehrere Sender und mehrere Empfänger vorgesehen, die aus unterschiedlichen Richtungen, beispielsweise über den Umfang des strangförmigen Produkts verteilt, Terahertzstrahlung auf das strangförmige Produkt aussenden bzw. von dem Produkt reflektierte Terahertzstrahlung empfangen. Sofern Sender und Empfänger als Transceiver integriert sind, können entsprechend mehrere Transceiver vorgesehen sein, zum Beispiel über den Umfang des strangförmigen Produkts verteilt.

Die mehreren Sender können Terahertzstrahlung unterschiedlicher Frequenz aussenden. Die mehreren Sender der erfindungsgemäßen Vorrichtung können entsprechend dazu ausgebildet sein, Terahertzstrahlung unterschiedlicher Frequenz auszusenden. Bei Vorhandensein mehrerer Sender sendet jeder Sender bevorzugt monofrequente Terahertzstrahlung aus, zum Beispiel ein Terahertz-Dauerstrichsignal auf einer Frequenz mit im Wesentlichen gleichbleibender Amplitude. Bei der vorgenannten Ausgestaltung unterscheiden sich die Frequenzen der von unterschiedlichen Sendern ausgesendeten Terahertzstrahlung voneinander. Dadurch können die von den unterschiedlichen Sendern ausgesendeten und von den Empfängern empfangenen unterschiedlichen Signale für die Auswertung voneinander unterschieden werden. Beispielsweise kann durch Einsatz geeigneter Frequenzfilter sichergestellt werden, dass jeder Empfänger nur die von einem bestimmten Sender ausgesendete Terahertzstrahlung empfängt.

Nach einer weiteren Ausgestaltung ist es auch möglich, dass zwischen den Frequenzen der von den mehreren Sendern ausgesendeten Terahertzstrahlung jeweils eine definierte Differenzfrequenz besteht, und dass die von den mehreren Sendern ausgesendete Terahertzstrahlung jeweils von allen Empfängern empfangen wird, wobei die von den Empfängern empfangenen Terahertzstrahlungssignale durch Demodulation der jeweiligen Differenzfrequenzen ausgewertet werden. Durch die Verwendung synchronisierter Sender bzw. Transceiver mit fester Differenzfrequenz muss keine Filterung derart erfolgen, dass ein bestimmter Empfänger nur Terahertzstrahlung eines bestimmten Senders empfängt. Vielmehr können die mit der Differenzfrequenz der Sendefrequenzen der beteiligten Sender modulierten Signale von den Empfängern entsprechend demoduliert werden. Die Sensitivität der erfindungsgemäßen Messung wird dadurch weiter erhöht und einer Ausrichtungsabhängigkeit weiter entgegengewirkt.

Nach einer weiteren Ausgestaltung können die empfangenen Strahlungssignale, gegebenenfalls nach einer mathematischen Bearbeitung, wie einer ersten oder zweiten Ableitung, summiert werden, insbesondere können die Quadrate der empfangenen Strahlungssignale summiert werden, bevor auf eine Fehlstelle des strangförmigen Produkts geschlossen wird. Hierdurch ergibt sich eine besonders einfache Methode der Auswertung. Außerdem werden die Fehlsignale aller Sender bzw. Empfänger zuverlässig ausgewertet. Zum Beispiel kann eine Summierung der Betragsquadrate sämtlicher abgeleiteten Strahlungssingale erfolgen als besonders einfache Möglichkeit zur Signalfusion. Dies ist auch möglich, wenn mehrere Sender bzw. Empfänger bzw. Transceiver ohne Q-Kanal verwendet werden.

Nach einer weiteren Ausgestaltung kann die von dem mindestens einen Sender ausgesendete Terahertzstrahlung derart fokussiert und/oder abgeblendet werden, dass die Ausdehnung des von der Terahertzstrahlung bestrahlten Bereichs des strangförmigen Produkts in Förderrichtung des strangförmigen Produkts kleiner ist als quer zur Förderrichtung. Es erfolgt somit eine Verkleinerung des Messflecks in Förderrichtung gesehen, relativ zur Ausdehnung des Messflecks quer zur Förderrichtung. Hierdurch können die Abgrenzung und Identifikation von Fehlstellen weiter verbessert werden. Die erfindungsgemäße Vorrichtung kann hierzu eine entsprechende Fokussierungseinrichtung und/oder Blendeneinrichtung umfassen.

Nach einer weiteren Ausgestaltung kann der mindestens eine Sender und/oder der mindestens eine Empfänger derart zu dem strangförmigen Produkt ausgerichtet sein, dass eine Hauptstrahlrichtung der Terahertzstrahlung schräg zu der Förderrichtung des strangförmigen Produkts verläuft. Die Hauptstrahlrichtung kann dabei schräg entgegen der Förderrichtung oder in Förderrichtung des strangförmigen Produkts verlaufen. Die Hauptstrahlrichtung kann beispielsweise unter einem Winkel von weniger als 80°, vorzugsweise nicht mehr als 70° zur Förderrichtung verlaufen. Eine Schrägstellung von Sender und/oder Empfänger, insbesondere eines Transceivers, ermöglicht es, die Signalsignaturen von Fehlstellen zu verändern. Insbesondere nimmt die Frequenz der Signaländerungen dadurch zu, so dass diese besser von Vibrationsfrequenzen des geförderten Produkts unterschieden werden können. So ergibt sich aufgrund der Änderung des Abstands der Fehlstelle zum Sender bzw. Empfänger aufgrund der Fördergeschwindigkeit v eine Signaländerung mit etwa der Frequenz $f = 2 \cdot v / \lambda \cdot \cos(\alpha)$, wobei lambda die Wellenlänge des Terahertz-Signals ist und alpha den Winkel zwischen Förderrichtung und Verbindungslinie zwischen Fehlstelle und Sender bzw. Empfänger beschreibt. Da der Sender bzw. Empfänger gerichtet empfängt und sendet, wird die Fehlstelle je nach Ausrichtung nur über einen beschränkten Winkelbereich gemessen. Dementsprechend führt eine direkte Ausrichtung auf das Produkt (alpha gleich etwa 90° und cos(alpha) entsprechend nahe 0) zu deutlich kleineren Frequenzen als eine Schrägstellung. So sind beispielsweise bei einer Fördergeschwindigkeit des Produkts von 60m/min, einer Wellenlänge von 2,5mm (entspricht 120 GHz) und einem Winkel von alpha=70° Frequenzen von grob 270 Hz zu erwarten. Dies stellt erfahrungsgemäß einen deutlichen Abstand zu Vibrationsfrequenzen des Produktes dar, wodurch eine eindeutige Unterscheidung zwischen Vibrationen und Fehlstellen möglich wird, auch wenn die Vibrationsfrequenzen in einem Bereich liegen, in dem bei einer direkten Ausrichtung auch die Fehlersignatur liegen würde. Durch eine stärkere Schrägstellung ließe sich die Frequenz bei Bedarf weiter steigern um bei Bedarf auch mit noch höherfrequenten Vibrationen umgehen zu können.

Die erfindungsgemäße Vorrichtung, insbesondere der mindestens eine Sender und/oder der mindestens eine Empfänger und/oder die Auswerteeinrichtung, können dazu ausgebildet sein, das erfindungsgemäße Verfahren auszuführen. Entsprechend kann das erfindungsgemäße Verfahren mit einer erfindungsgemäßen Vorrichtung ausgeführt werden,

Ausführungsbeispiele der Erfindung werden nachfolgend anhand von Figuren näher erläutert. Es zeigen schematisch:

Fig. 1 eine erfindungsgemäße Vorrichtung nach einem ersten Ausführungsbeispiel,

Fig. 2 ein Teil der in Fig. 1 gezeigten Vorrichtung in einem ersten Betriebszustand,

Fig. 3 die Darstellung aus Fig. 2 in einem zweiten Betriebszustand,

Fig. 4 ein Teil der in Fig. 1 gezeigten Vorrichtung nach einem weiteren Ausführungsbeispiel,

Fig. 5 ein mit dem erfindungsgemäßen Verfahren bzw. der erfindungsgemäßen Vorrichtung empfangenes Terahertzstrahlungssignal, und

Fig. 6 das empfangene Terahertzstrahlungssignal aus Fig. 5 in einem bearbeiteten Zustand.

Soweit nichts anderes angegeben ist, bezeichnen in den Figuren gleiche Bezugszeichen gleiche Gegenstände.

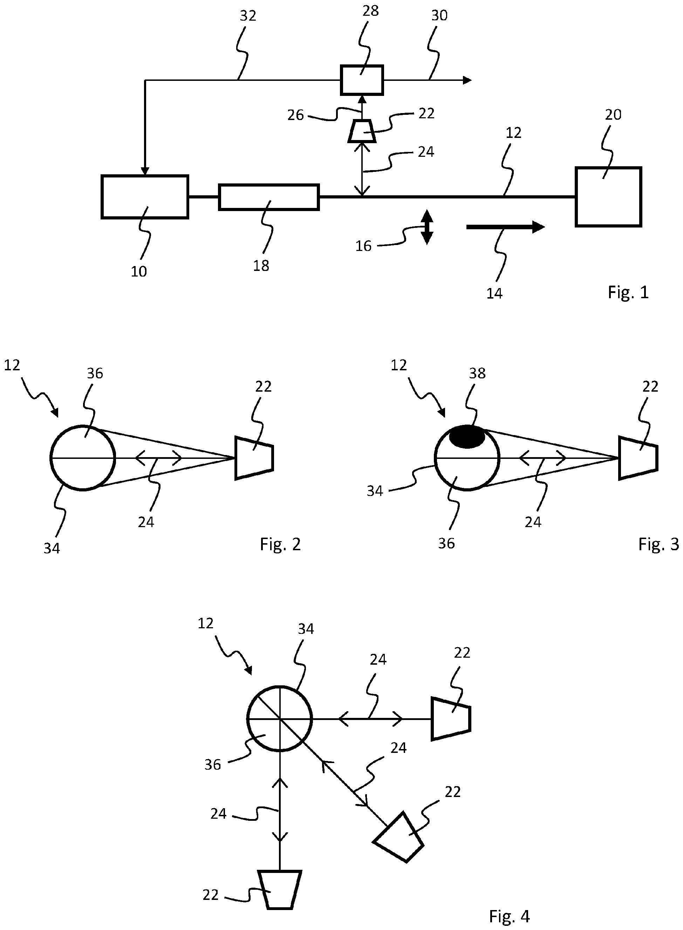

Die in Fig. 1 dargestellte erfindungsgemäße Vorrichtung umfasst eine Extrusionsvorrichtung 10 zum Extrudieren eines strangförmigen Produkts 12, vorliegend eines dünnen Kunststoffrohrs 12. Das strangförmige Produkt 12 kann einen geringen Außendurchmesser von beispielsweise weniger als 10 mm, vorzugsweise weniger als 5 mm aufweisen. Nach Austritt aus der Extrusionsvorrichtung 10 wird das strangförmige Produkt 12 entlang einer Förderrichtung 14, die gleichzeitig der Längsachse des strangförmigen Produkts 12 entspricht, gefördert. Die Fördergeschwindigkeit entlang der Förderrichtung 14 beträgt mehr als 50 m/min, vorzugsweise mehr als 75 m/min. Während der Bewegung des strangförmigen Produkts 12 entlang der Förderrichtung, kann dieses außerdem eine laterale Bewegung quer zur Förderrichtung ausführen, wie durch den Pfeil 16 in Fig. 1 veranschaulicht. Diese laterale Bewegung besitzt eine maximale Geschwindigkeit, die wesentlich geringer ist, als die maximale Geschwindigkeit entlang der Förderrichtung, zum Beispiel mindestens 10 mal geringer. Die durch den Pfeil 16 veranschaulichte laterale Bewegung kann eine im Wesentlichen periodische laterale Schwingung sein. Die laterale Schwingung kann eine vergleichsweise geringe Frequenz von weniger als 10 Hz, zum Beispiel weniger als 2 Hz, zum Beispiel etwa 1 Hz besitzen.

Nach Austritt aus der Extrusionsvorrichtung 10 durchläuft das strangförmige Produkt 12 in der Regel eine oder mehrere Kühlstrecken 18, in der bzw. in denen das strangförmige Produkt 12 zur Erkaltung abgekühlt wird, zum Beispiel durch Aufsprühen einer Kühlflüssigkeit. Am Ende der in Fig. 1 dargestellten Vorrichtung ist eine Aufrollvorrichtung 20 angeordnet, in der das strangförmige Produkt 12 auf eine Rolle aufgerollt werden kann. Stromab der Abkühlstrecke 18 ist in dem dargestellten Beispiel in Fig. 1 ein Transceiver 22 angeordnet, der einen Sender zum Aussenden von Terahertzstrahlung auf das strangförmige Produkt 12 und einen Empfänger zum Empfangen von an Grenzflächen des strangförmigen Produkts 12 reflektierter Terahertzstrahlung aufweist. Die von dem Transceiver 22 ausgesandte, an dem strangförmigen Produkt 12 reflektierte und von dem Transceiver 22 wieder empfangene reflektierte Terahertzstrahlung ist in Fig. 1 durch den Pfeil 24 veranschaulicht. Messsignale des Transceivers 22 bzw. des Empfängers werden über eine Leitung 26 einer Auswerteeinrichtung 28 zugeführt. Die Auswerteeinrichtung 28 ist dazu ausgebildet, aus einer temporären Veränderung des von dem mindestens einen Empfänger empfangenen Terahertzstrahlungssignals auf eine Fehlstelle des strangförmigen Produkts 12 zu schließen. Dies wird nachfolgend anhand der Figuren 2 und 3 noch näher erläutert. Sofern die Auswerteeinrichtung 28 eine entsprechende Fehlstelle detektiert, kann sie beispielsweise ein entsprechendes Fehlersignal ausgeben, wie in Fig. 1 durch den Pfeil 30 veranschaulicht. Auch kann sie Einfluss auf die Extrusionsvorrichtung 10 nehmen, wie durch den Pfeil 32 veranschaulicht, beispielsweise Produktionsparameter der Extrusionsvorrichtung 10 verändern oder die Extrusionsvorrichtung 10 stoppen.

In Fig. 2 ist das strangförmige Produkt 12 im Querschnitt dargestellt. Dabei ist ein von einer im Querschnitt kreisförmigen Wand 34 des als Rohr ausgebildeten strangförmigen Produkts 12 umschlossener Innenraum 36 zu erkennen. In Fig. 2 befindet sich keine Fehlstelle, insbesondere kein Extrusionsrückstand, in dem Innenraum 36 des strangförmigen Produkts 12. Der Transceiver 22 bzw. der Empfänger des Transceivers 22 empfängt entsprechend bis auf eine durch eine etwaige laterale Bewegung des strangförmigen Produkts 12 verursachte gleichmäßige Signalschwingung ein entsprechend regelmäßiges bzw. gleichförmiges Signal. Die Terahertzstrahlung wird an den unterschiedlichen Grenzflächen des strangförmigen Produkts 12 reflektiert, insbesondere an der dem Transceiver 22 zugewandten Außenseite sowie der dem Transceiver 22 zugewandten Innenseite der Wand 34. Auch Mehrfachreflektionen können auftreten.

In Fig. 3 ist die Darstellung aus Fig. 2 in einem weiteren Betriebszustand dargestellt. Durch das Bewegen des strangförmigen Produkts 12 entlang der Förderrichtung ist in dem in Fig. 3 dargestellten Zustand eine im Innenraum 36 des strangförmigen Produkts 12 verbliebene Fehlstelle 38 in Form eines Extrusionsrückstands im Sichtfeld der Terahertzstrahlung. Dies führt aufgrund von zusätzlichen Grenzflächen sowie der Veränderung von Grenzflächen zu einer schnellen temporären Änderung des empfangenen Terahertzstrahlungssignals.

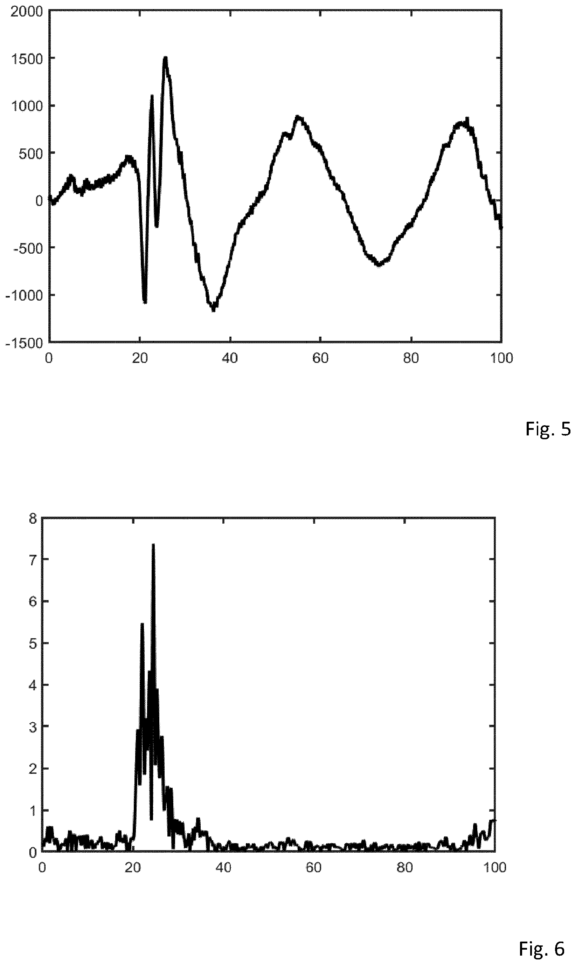

Dies soll anhand der Figuren 5 und 6 erläutert werden. In Fig. 5 ist das von dem Transceiver 22 empfangene reflektierte Terahertzstrahlungssignal als Rohsignal in beliebigen Einheiten über der Zeit in Millisekunden [ms] aufgetragen. Zwischen etwa 20 ms und 25 ms ist eine schnelle Signaländerung zu erkennen, mit einer Frequenz von beispielsweise etwa 300 Hz. Diese schnelle Signaländerung ist durch die Fehlstelle 38 verursacht. Sie lässt sich, wie bereits in dem Rohsignal der Fig. 5 zu erkennen, gut von einer nachfolgenden gleichmäßigen Oszillation des empfangenen Terahertzstrahlungssignals diskriminieren, die zum Beispiel durch eine laterale Schwingung des strangförmigen Produkts 12 verursacht sein kann. In Fig. 5 ist auch zu erkennen, dass die Oszillation des Terahertzstrahlungssignals aufgrund der lateralen Schwingung des strangförmigen Produkts 12 eine wesentlich geringere Frequenz besitzt als die durch die Fehlstelle 38 verursachte Signaländerung vorliegend zum Beispiel nur etwa 30 Hz.

In Fig. 6 ist eine mathematisch bearbeitete Fassung des in Fig. 5 gezeigten Rohsignals dargestellt. Dabei ist wiederum in beliebigen Einheiten das empfangene und mathematisch bearbeitete Terahertzstrahlungssignal als Funktion der Zeit in Millisekunden [ms] aufgetragen. Zum Erlangen des in Fig. 6 gezeigten bearbeiteten Signals wurden Quadrate der beispielsweise durch einen Bandpassfilter gefilterten zweiten mathematischen Ableitungen des in Fig. 5 gezeigten Rohsignals verwendet. Insbesondere wenn zum Beispiel mehrere Transceiver eingesetzt werden, wie nachfolgend noch anhand der Fig. 4 näher erläutert werden wird, ist es möglich, die empfangenen Terahertzstrahlungssignale der verschiedenen Transceiver aufzusummieren, um zu dem in Fig. 6 dargestellten Auswertungssignal zu gelangen. In Fig. 6 setzt sich die in Fig. 5 bereits im Rohsignal grundsätzlich erkennbare Fehlstelle 38 sehr deutlich von dem übrigen Signalverlauf ab. Die Schwingung des strangförmigen Produkts 12 in lateraler Richtung wirkt sich nicht mehr merklich aus. Wie in Fig. 6 zu erkennen, kann für das Ausgeben einer Fehlstelle in einfacher Weise ein geeigneter Schwellwert des mathematisch bearbeiteten Terahertzstrahlungssignals festgelegt werden.

Anhand von Fig. 4 wird nachfolgend ein weiteres Ausführungsbeispiel erläutert. Bei dem Ausführungsbeispiel nach Fig. 4 sind über den Umfang des strangförmigen Produkts 12 verteilt im dargestellten Beispiel drei Transceiver 22 angeordnet, die jeweils Terahertzstrahlung auf das strangförmige Produkt 12 aussenden und von Grenzflächen des strangförmigen Produkts 12 reflektierte Terahertzstrahlung empfangen, wie wiederum durch die Pfeile 24 veranschaulicht. Es sei darauf hingewiesen, dass in Fig. 4 nur die Hauptstrahlungsrichtung dargestellt ist, entlang der sich die stärksten Reflektionen ergeben. Es versteht sich, dass die Transceiver 22 jeweils Terahertzstrahlung aussenden, die das strangförmige Produkt 12 im Querschnitt vollständig erfasst.

Wie bereits erläutert, können die empfangenen Terahertzstrahlungssignale der Transceiver 22 in Fig. 4 gegebenenfalls nach einer mathematischen Bearbeitung aufsummiert werden, um das in Fig. 6 gezeigte bearbeitete Strahlungssignal zu erhalten. Es ist auch möglich, dass die unterschiedlichen Transceiver 22 Terahertzstrahlung unterschiedlicher Frequenzen aussenden, so dass die empfangene Terahertzstrahlung den einzelnen Transceivern 22 zugeordnet werden kann. Auf diese Weise kann beispielsweise sichergestellt werden, dass jeweils nur ein Empfänger Terahertzstrahlung von jeweils nur einem Sender empfängt. Auch möglich wäre es zum Beispiel, dass Terahertzstrahlung von verschiedenen Sendern von allen Empfängern empfangen wird und beispielsweise bei einer fest definierten Differenzfrequenz zwischen den Sendefrequenzen entsprechend demoduliert wird.

Selbstverständlich können auch noch weitere Transceiver 22 über den Umfang des strangförmigen Produkts 12 verteilt angeordnet werden, zum Beispiel über den gesamten Umfang in regelmäßigen Abständen. Durch das Vorsehen mehrerer Transceiver 22 kann einer etwaigen Richtungsabhängigkeit der Detektion von Fehlstellen entgegengewirkt werden.

Bezugszeichenliste

10    Extrusionsvorrichtung
12    strangförmiges Produkt
14    Förderrichtung
16    Pfeil
18    Kühlstrecke
20    Aufrollvorrichtung
22    Transceiver
24    Pfeil
26    Leitung
28    Auswerteeinrichtung
30    Pfeil
32    Pfeil
34    kreisförmige Wand
36    Innenraum
38    Fehlstelle

**Patentansprüche**

1. Verfahren zum Detektieren von Fehlstellen (38) eines mit einer Fördergeschwindigkeit von mehr als 50m/min entlang einer Förderrichtung (14) geförderten strangförmigen Produkts (12), wobei das strangförmige Produkt (12) während des Förderns entlang der Förderrichtung (14) auch eine laterale Bewegung quer zur Förderrichtung (14) ausführt, **dadurch gekennzeichnet, dass** Terahertzstrahlung (24) von mindestens einem Sender (22) auf das entlang der Förderrichtung (14) geförderte strangförmige Produkt (12) ausgesendet und von dem strangförmigen Produkt (12) reflektierte Terahertzstrahlung (24) von mindestens einem Empfänger (22) empfangen wird, und dass aus einer temporären Veränderung des von dem mindestens einen Empfänger (22) empfangenen Terahertzstrahlungssignals auf eine Fehlstelle (38) des strangförmigen Produkts (12) geschlossen wird, wobei aus der temporären Veränderung des von dem Empfänger (22) empfangenen Terahertzstrahlungssignals nur auf eine Fehlstelle (38) des strangförmigen Produkts (12) geschlossen wird, wenn eine Frequenz der temporären Veränderung größer ist als eine Frequenz der lateralen Bewegung des strangförmigen Produkts (12).

2. Verfahren nach Anspruch 1, **dadurch gekennzeichnet, dass** das strangförmige Produkt (12) ein in einer Extrusionsvorrichtung (10) extrudiertes Rohr ist, und dass die zu detektierenden Fehlstellen (38) Extrusionsrückstände im Inneren des Rohrs sind und/oder dass das strangförmige Produkt (12) mit einer Fördergeschwindigkeit von mehr als 75m/min entlang der Förderrichtung (14) gefördert wird und/oder dass Strukturen oder Wandstärken des strangförmigen Produkts (12) kleiner als die Wellenlänge der verwendeten THz-Strahlung sind.

3. Verfahren nach einem der vorhergehenden Ansprüche, **dadurch gekennzeichnet, dass** die erste Ableitung des von dem mindestens einen Empfänger (22) empfangenen Terahertzstrahlungssignals gebildet wird, und dass auf eine Fehlstelle (38) geschlossen wird, wenn das einfach abgeleitete Terahertzstrahlungssignal einen definierten Schwellwert überschreitet und/oder dass die n-te Ableitung des von dem mindestens einen Empfänger (22) empfangenen Terahertzstrahlungssignals gebildet wird, mit n >= 2, und dass auf eine Fehlstelle (38) geschlossen wird, wenn das n-fach abgeleitete Terahertzstrahlungssignal einen definierten Schwellwert überschreitet.

4. Verfahren nach Anspruch 3, **dadurch gekennzeichnet, dass** der Schwellwert abhängig von der Fördergeschwindigkeit des strangförmigen Produkts (12) entlang der Förderrichtung (14) definiert wird.

5. Verfahren nach einem der vorhergehenden Ansprüche, **dadurch gekennzeichnet, dass** das von dem mindestens einen Empfänger (22) empfangene Terahertzstrahlungssignal mittels eines Bandpassfilters gefiltert wird und/oder dass der mindestens eine Sender (22) ein Terahertz-Dauerstrichsignal auf einer Frequenz mit im Wesentlichen gleichbleibender Amplitude aussendet.

6. Verfahren nach einem der vorhergehenden Ansprüche, **dadurch gekennzeichnet, dass** der mindestens eine Sender (22) ein Terahertz-Signal aussendet mit einer Bandbreite, die kleiner ist als eine Frequenz, die der räumlichen Auflösbarkeit des Durchmessers des strangförmigen Produkts (14) entspricht und/oder dass der mindestens eine Sender (22) ein Terahertz-Signal aussendet mit einer Bandbreite, die weniger als 5% der mittleren Frequenz des Terahertz-Signals, vorzugsweise weniger als 3% der mittleren Frequenz des Terahertz-Signals, weiter vorzugsweise weniger als 2% der mittleren Frequenz des Terahertz-Signals, weiter vorzugsweise nicht mehr als 1% der mittleren Frequenz des Terahertz-Signals, beträgt.

7. Verfahren nach einem der vorhergehenden Ansprüche, **dadurch gekennzeichnet, dass** Terahertzstrahlung (24) von mehreren Sendern (22) aus verschiedenen Richtungen auf das entlang der Förderrichtung (14) geförderte strangförmige Produkt (12) ausgesendet wird, und dass die von den mehreren Sendern (22) ausgesendete und von dem strangförmigen Produkt (12) reflektierte Terahertzstrahlung (24) von mehreren Empfängern (22) empfangen wird.

8. Verfahren nach Anspruch 7, **dadurch gekennzeichnet, dass** die mehreren Sender (22) Terahertzstrahlung (24) unterschiedlicher Frequenz aussenden.

9. Verfahren nach Anspruch 8, **dadurch gekennzeichnet, dass** zwischen den Frequenzen der von den mehreren Sendern (22) ausgesendeten Terahertzstrahlung (24) jeweils eine definierte Differenzfrequenz besteht, und dass die von den mehreren Sendern (22) ausgesendete Terahertzstrahlung (24) jeweils von allen Empfängern (22) empfangen wird, wobei die von den Empfängern (22) empfangenen Terahertzstrahlungssignale durch Demodulation der jeweiligen Differenzfrequenzen ausgewertet werden.

10. Verfahren nach einem der vorhergehenden Ansprüche, **dadurch gekennzeichnet, dass** die empfangenen Strahlungssignale summiert werden, insbesondere dass die Quadrate der empfangenen Strahlungssignale summiert werden, bevor auf eine Fehlstelle (38) des strangförmigen Produkts (12) geschlossen wird.

11. Verfahren nach einem der vorhergehenden Ansprüche, **dadurch gekennzeichnet, dass** die von dem mindestens einen Sender (22) ausgesendete Terahertzstrahlung (24) derart fokussiert und/oder abgeblendet wird, dass die Ausdehnung des von der Terahertzstrahlung (24) bestrahlten Bereichs des strangförmigen Produkts (12) in Förderrichtung (14) des strangförmigen Produkts (12) kleiner ist als quer zur Förderrichtung (14) und/oder dass der mindestens eine Sender (22) und/oder der mindestens eine Empfänger (22) derart zu dem strangförmigen Produkt (12) ausgerichtet ist, dass eine Hauptstrahlrichtung der Terahertzstrahlung (24) schräg zu der Förderrichtung des strangförmigen Produkts (12) verläuft.

12. Vorrichtung zum Detektieren von Fehlstellen (38) eines mit einer Fördergeschwindigkeit von mehr als 50m/min entlang einer Förderrichtung (14) geförderten strangförmigen Produkts (12), wobei das strangförmige Produkt (12) während des Förderns entlang der Förderrichtung (14) auch eine laterale Bewegung quer zur Förderrichtung (14) ausführt, **dadurch gekennzeichnet, dass** die Vorrichtung mindestens einen Sender (22) zum Aussenden von Terahertzstrahlung (24) auf das entlang der Förderrichtung (14) geförderte strangförmige Produkt (12) und mindestens einen Empfänger (22) zum Empfangen von von dem strangförmigen Produkt (12) reflektierter Terahertzstrahlung (24) umfasst, und dass die Vorrichtung weiterhin eine Auswerteeinrichtung (28) umfasst, die dazu ausgebildet ist, aus einer temporären Veränderung des von dem mindestens einen Empfänger (22) empfangenen Terahertzstrahlungssignals auf eine Fehlstelle (38) des strangförmigen Produkts (12) zu schließen, und die weiter dazu ausgebildet ist, aus der temporären Veränderung des von dem Empfänger (22) empfangenen Terahertzstrahlungssignals nur auf eine Fehlstelle (38) des strangförmigen Produkts (12) zu schließen, wenn eine Frequenz der temporären Veränderung größer ist als eine Frequenz der lateralen Bewegung des strangförmigen Produkts (12).

13. Vorrichtung nach Anspruch 12, **dadurch gekennzeichnet, dass** die Vorrichtung weiterhin eine Extrusionsvorrichtung (10) umfasst, dass das strangförmige Produkt (12) ein in einer Extrusionsvorrichtung (10) extrudiertes Rohr ist, und dass die zu detektierenden Fehlstellen (38) Extrusionsrückstände im Inneren des Rohrs sind.

14. Vorrichtung nach einem der Ansprüche 12 oder 13, **dadurch gekennzeichnet, dass** die Vorrichtung mehrere Sender (22) umfasst zum Aussenden von Terahertzstrahlung (24) aus verschiedenen Richtungen auf das entlang der Förderrichtung (14) geförderte strangförmige Produkt (12), und dass die Vorrichtung mehrere Empfänger (22) umfasst zum Empfangen der von den mehreren Sendern ausgesendeten und von dem strangförmigen Produkt (12) reflektierten Terahertzstrahlung (24).

15. Vorrichtung nach einem der Ansprüche 12 bis 14, **dadurch gekennzeichnet, dass** die Vorrichtung dazu ausgebildet ist, das Verfahren nach einem der Ansprüche 1 bis 11 auszuführen.

**Claims**

1. A method for detecting defects (38) of a strand-like product (12) conveyed along a conveying direction (14) with a conveying speed of more than 50 m/min, wherein the strand-like product (12), during the conveying along the conveying direction (14), also performs a lateral movement transversely to the conveying direction (14), **characterized in that** terahertz radiation (24) is emitted by at least one transmitter (22) onto the strand-like product (12) conveyed along the conveying direction (14) and terahertz radiation (24) reflected by the strand-like product (12) is received by at least one receiver (22), and **in that** a defect (38) of the strand-like product (12) is inferred from a temporary change in the terahertz radiation signal received by the at least one receiver (22), wherein a defect (38) of the strand-like product (12) is inferred from the temporary change in the terahertz radiation signal received by the receiver (22) only if a frequency of the temporary change is greater than a frequency of the lateral movement of the strand-like product (12).

2. The method according to claim 1, **characterized in that** the strand-like product (12) is a tube extruded in an extrusion device (10), and **in that** the defects (38) to be detected are extrusion residues inside the tube and/or **in that** the strand-like product (12) is conveyed along the conveying direction (14) with a conveying speed of more than 75 m/min and/or **in that** structures or wall thicknesses of the strand-like product (12) are smaller than the wavelength of the THz radiation used.

3. The method according to one of the preceding claims, **characterized in that** the first derivative of the terahertz radiation signal received by the at least one receiver (22) is formed, and **in that** a defect (38) is inferred if the once-derived terahertz radiation signal exceeds a defined threshold and/or **in that** the

$n^{th}$ derivative of the terahertz radiation signal received by the at least one receiver (22) is formed, with n >= 2, and **in that** a defect (38) is inferred if the n-fold derived terahertz radiation signal exceeds a defined threshold.

4.   The method according to claim 3, **characterized in that** the threshold is defined depending on the conveying speed of the strand-like product (12) along the conveying direction (14).

5.   The method according to one of the preceding claims, **characterized in that** the terahertz radiation signal received by the at least one receiver (22) is filtered by means of a band-pass filter and/or **in that** the at least one transmitter (22) emits a continuous wave terahertz signal at a frequency with a substantially constant amplitude.

6.   The method according to one of the preceding claims, **characterized in that** the at least one transmitter (22) emits a terahertz signal with a bandwidth that is smaller than a frequency that corresponds to the spatial resolvability of the diameter of the strand-like product (14) and/or **in that** the at least one transmitter (22) emits a terahertz signal with a bandwidth that is less than 5% of the average frequency of the terahertz signal, preferably less than 3% of the average frequency of the terahertz signal, further preferably less than 2% of the average frequency of the terahertz signal, further preferably not more than 1% of the average frequency of the terahertz signal.

7.   The method according to one of the preceding claims, **characterized in that** terahertz radiation (24) is emitted by multiple transmitters (22) from various directions onto the strand-like product (12) conveyed along the conveying direction (14), and **in that** the terahertz radiation (24) emitted by the multiple transmitters (22) and reflected by the strand-like product (12) is received by multiple receivers (22).

8.   The method according to claim 7, **characterized in that** the multiple transmitters (22) emit terahertz radiation (24) of different frequencies.

9.   The method according to claim 8, **characterized in that** a defined differential frequency exists in each case between the frequencies of the terahertz radiation (24) emitted by the multiple transmitters (22), and **in that** the terahertz radiation (24) emitted by the multiple transmitters (22) is received in each case by all of the receivers (22), wherein the terahertz radiation signals received by the receivers (22) are evaluated by demodulation of the respective differential frequencies.

10.  The method according to one of the preceding claims, **characterized in that** the received radiation signals are summed, in particular **in that** the squares of the received radiation signals are summed, before a defect (38) of the strand-like product (12) is inferred.

11.  The method according to one of the preceding claims, **characterized in that** the terahertz radiation (24) emitted by the at least one transmitter (22) is focused and/or dimmed such that the extent of the region of the strand-like product (12) irradiated by the terahertz radiation (24) is smaller in the conveying direction (14) of the strand-like product (12) than transversely to the conveying direction (14) and/or **in that** the at least one transmitter (22) and/or the at least one receiver (22) is aligned with the strand-like product (12) such that a main beam direction of the terahertz radiation (24) runs obliquely to the conveying direction of the strand-like product (12).

12.  A device for detecting defects (38) of a strand-like product (12) conveyed along a conveying direction (14) with a conveying speed of more than 50 m/min, wherein the strand-like product (12), during the conveying along the conveying direction (14), also performs a lateral movement transversely to the conveying direction (14), **characterized in that** the device comprises at least one transmitter (22) for emitting terahertz radiation (24) onto the strand-like product (12) conveyed along the conveying direction (14) and at least one receiver (22) for receiving terahertz radiation (24) reflected by the strand-like product (12), and **in that** the device also comprises an evaluation apparatus (28), which is designed to infer a defect (38) of the strand-like product (12) from a temporary change in the terahertz radiation signal received by the at least one receiver (22), and which is further designed to infer a defect (38) of the strand-like product (12) from the temporary change in the terahertz radiation signal received by the receiver (22) only if a frequency of the temporary change is greater than a frequency of the lateral movement of the strand-like product (12).

13.  The device according to claim 12, **characterized in that** the device also comprises an extrusion device (10), **in that** the strand-like product (12) is a tube extruded in an extrusion device (10), and **in that** the defects (38) to be detected are extrusion residues inside the tube.

14.  The device according to one of claims 12 or 13, **characterized in that** the device comprises multiple transmitters (22) to emit terahertz radiation (24) from various directions onto the strand-like product (12) conveyed along the conveying direction (14), and **in that** the device comprises multiple receivers (22) for receiving the terahertz radiation (24) emitted by the multiple transmitters and reflected by the strand-like product (12).

15. The device according to one of claims 12 to 14, **characterized in that** the device is designed to perform the method according to one of claims 1 to 11.

## Revendications

1. Procédé de détection de défauts (38) d'un produit allongé (12) transporté à une vitesse de transport supérieure à 50 m/min le long d'une direction de transport (14), dans lequel le produit allongé (12) effectue également un mouvement latéral transversalement à la direction de transport (14) pendant le transport le long de la direction de transport (14), **caractérisé en ce qu'**un rayonnement térahertz (24) est émis par au moins un émetteur (22) vers le produit allongé (12) transporté le long de la direction de transport (14) et le rayonnement térahertz (24) réfléchi par le produit allongé (12) est reçu par au moins un récepteur (22), et **en ce qu'**un défaut (38) du produit allongé (12) est décelé à partir d'une modification temporaire du signal de rayonnement térahertz reçu par l'au moins un récepteur (22), dans lequel seul un défaut (38) du produit allongé (12) est décelé à partir de la modification temporaire du signal de rayonnement térahertz reçu par le récepteur (22), lorsqu'une fréquence de la modification temporaire est supérieure à une fréquence du mouvement latéral du produit allongé (12).

2. Procédé selon la revendication 1, **caractérisé en ce que** le produit allongé (12) est un tuyau extrudé dans un dispositif d'extrusion (10), et **en ce que** les défauts (38) à détecter sont des résidus d'extrusion à l'intérieur du tuyau et/ou **en ce que** le produit allongé (12) est transporté à une vitesse de transport supérieure à 75 m/min le long de la direction de transport (14) et/ou **en ce que** des structures ou des épaisseurs de paroi du produit allongé (12) sont plus petites que la longueur d'onde du rayonnement THz utilisé.

3. Procédé selon l'une des revendications précédentes, **caractérisé en ce que** la première dérivée du signal de rayonnement térahertz reçu par l'au moins un récepteur (22) est formée, et **en ce qu'**un défaut (38) est décelé lorsque le signal de rayonnement térahertz dérivé une fois dépasse une valeur seuil définie et/ou **en ce que** la nième dérivée du signal de rayonnement térahertz reçu par l'au moins un récepteur (22) est formée, avec n >= 2, et **en ce qu'**un défaut (38) est décelé lorsque le signal de rayonnement térahertz dérivé n fois dépasse une valeur seuil définie.

4. Procédé selon la revendication 3, **caractérisé en ce que** la valeur seuil est définie en fonction de la vitesse de transport du produit allongé (12) le long de la direction de transport (14).

5. Procédé selon l'une des revendications précédentes, **caractérisé en ce que** le signal de rayonnement térahertz reçu par l'au moins un récepteur (22) est filtré au moyen d'un filtre passe-bande et/ou **en ce que** l'au moins un émetteur (22) émet un signal à onde continue térahertz à une fréquence d'une amplitude quasiment constante.

6. Procédé selon l'une des revendications précédentes, **caractérisé en ce que** l'au moins un émetteur (22) émet un signal térahertz avec une bande passante inférieure à une fréquence correspondant à la capacité de résolution spatiale du diamètre du produit allongé (14) et/ou **en ce que** l'au moins un émetteur (22) émet un signal térahertz avec une bande passante à moins de 5 % de la fréquence moyenne du signal térahertz, préférentiellement à moins de 3 % de la fréquence moyenne du signal térahertz, plus préférentiellement à moins de 2 % de la fréquence moyenne du signal térahertz, plus préférentiellement à pas plus de 1 % de la fréquence moyenne du signal térahertz.

7. Procédé selon l'une des revendications précédentes, **caractérisé en ce que** le rayonnement térahertz (24) est émis par plusieurs émetteurs (22) à partir de différentes directions vers le produit allongé (12) transporté le long de la direction de transport (14), et **en ce que** le rayonnement térahertz (24) émis par la pluralité d'émetteurs (22) et réfléchi par le produit allongé (12) est reçu par plusieurs récepteurs (22).

8. Procédé selon la revendication 7, **caractérisé en ce que** la pluralité d'émetteurs (22) émettent un rayonnement térahertz (24) de fréquence différente.

9. Procédé selon la revendication 8, **caractérisé en ce qu'**une fréquence différentielle définie se présente respectivement entre les fréquences du rayonnement térahertz (24) émis par la pluralité d'émetteurs (22), et **en ce que** le rayonnement térahertz (24) émis par la pluralité d'émetteurs (22) est reçu respectivement par tous les récepteurs (22), dans lequel les signaux de rayonnement térahertz reçus par les récepteurs (22) sont évalués par démodulation des fréquences différentielles respectives.

10. Procédé selon l'une des revendications précédentes, **caractérisé en ce que** les signaux de rayonnement reçu sont additionnés, en particulier **en ce que** les quadrats des signaux de rayonnement reçus sont additionnés avant qu'un défaut (38) du produit allongé (12) ne soit décelé.

**11.** Procédé selon l'une des revendications précédentes, **caractérisé en ce que** le rayonnement térahertz (24) émis par l'au moins un émetteur (22) est focalisé et/ou masqué de telle façon que l'expansion de la région du produit allongé (12) irradiée par le rayonnement térahertz (24) est plus petite dans la direction de transport (14) du produit allongé (12) que transversalement à la direction de transport (14) et/ou **en ce que** l'au moins un émetteur (22) et/ou l'au moins un récepteur (22) est/sont orienté(s) de telle façon par rapport au produit allongé (12), qu'une direction de rayonnement principale du rayonnement térahertz (24) s'étend de façon oblique par rapport à la direction de transport du produit allongé (12).

**12.** Dispositif de détection de défauts (38) d'un produit allongé (12) transporté à une vitesse de transport supérieure à 50 m/min le long d'une direction de transport (14), dans lequel le produit allongé (12) effectue également un mouvement latéral transversalement à la direction de transport (14) pendant le transport le long de la direction de transport (14), **caractérisé en ce que** le dispositif comporte au moins un émetteur (22) destiné à émettre un rayonnement térahertz (24) vers le produit allongé (12) transporté le long de la direction de transport (14) et au moins un récepteur (22) destiné à recevoir le rayonnement térahertz (24) réfléchi par le produit allongé (12), et **en ce que** le dispositif comporte en outre un moyen d'évaluation (28) conçu pour déceler un défaut (38) du produit allongé (12) à partir d'une modification temporaire du signal de rayonnement térahertz reçu par l'au moins un récepteur (22), et lequel est en outre conçu pour déceler seulement un défaut (38) du produit allongé (12) à partir de la modification temporaire du signal de rayonnement térahertz reçu par le récepteur (22) lorsqu'une fréquence de la modification temporaire est supérieure à une fréquence du mouvement latéral du produit allongé (12).

**13.** Dispositif selon la revendication 12, **caractérisé en ce que** le dispositif comporte en outre un dispositif d'extrusion (10), **en ce que** le produit allongé (12) est un tuyau extrudé dans un dispositif d'extrusion (10), et **en ce que** les défauts (38) à détecter sont des résidus d'extrusion à l'intérieur du tuyau.

**14.** Dispositif selon l'une des revendications 12 ou 13, **caractérisé en ce que** le dispositif comporte plusieurs émetteurs (22) destinés à émettre un rayonnement térahertz (24) à partir de différentes directions vers le produit allongé (12) transporté le long de la direction de transport (14), et **en ce que** le dispositif comporte plusieurs récepteurs (22) destinés à recevoir le rayonnement térahertz (24) émis par la pluralité d'émetteurs et réfléchi par le produit allongé (12).

**15.** Dispositif selon l'une des revendications 12 à 14, **caractérisé en ce que** le dispositif est conçu pour mettre en oeuvre le procédé selon l'une des revendications 1 à 11.

32  28  30

26  22

24  12  20

16  14  Fig. 1

10  18

12  36  22

34  24

24  Fig. 2

34

12  38  22

34  24

36  24  Fig. 3

36

12  34  24  22

24

24  22

24  22

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10514336 B2
- WO 2019086081 A1
- WO 2016139155 A1